# NEUE EUROPÄISCHE PATENTSCHRIFT

(11) **EP 2 753 847 B2**
(45) Veröffentlichungstag und Bekanntmachung des Hinweises auf die Entscheidung über den Einspruch: **04.12.2024**
(45) Hinweis auf die Patenterteilung: 02.01.2019
(21) Anmeldenummer: 12765984.5
(22) Anmeldetag: 21.08.2012
(51) Int. Cl.: F16F 15/12, F16F 15/129, F16F 15/14, F16D 13/38, F16D 3/12

(54) **FLIEHKRAFTPENDEL UND KUPPLUNGSSCHEIBE MIT DIESEM**
CENTRIFUGAL PENDULUM AND CLUTCH DISC HAVING THE LATTER
PENDULE CENTRIFUGE ET DISQUE D'EMBRAYAGE DOTÉ DUDIT PENDULE CENTRIFUGE

(30) Priorität: 09.09.2011 DE 102011082389
(43) Veröffentlichungstag der Anmeldung: 16.07.2014
(73) Patentinhaber: Schaeffler Technologies AG & Co. KG, 91074 Herzogenaurach (DE)
(72) Erfinder: RUSCH, Alain, F-67170 Brumath (FR); LEHMANN, Steffen, 76275 Ettlingen (DE); HEPPERLE, Walter, 77542 Offenburg (DE)
(86) Internationale Anmeldenummer: PCT/DE2012/000841
(87) Internationale Veröffentlichungsnummer: WO 2013/034125

(56) Entgegenhaltungen:
- EP-A1- 2 685 127
- EP-A2- 1 780 434
- WO-A1-2010/028620
- DE-A1- 102006 028 552
- DE-A1- 102009 033 864
- DE-A1- 102009 042 837
- DE-A1- 102010 049 929
- US-A- 6 068 098

## Beschreibung

Die Erfindung betrifft ein Fliehkraftpendel und eine Kupplungsscheibe mit diesem mit einem um eine Drehachse verdrehbaren Pendelflansch mit mehreren über den Umfang verteilten, an dem Pendelflansch verschwenkbar aufgenommenen Pendelmassen.

Zur Reduzierung von Torsionsschwingungen beispielsweise einer Brennkraftmaschine mit infolge über den Drehwinkel einer Kurbelwelle aufeinander folgenden Zündungen, werden Drehschwingungsdämpfer und/oder Drehschwingungstilger eingesetzt, welche auf die Erregerfrequenz optimiert sind und die Drehmomentspitzen der Torsionsschwingungen zwischenspeichern und in den Drehmomentminima der Torsionsschwingungen wieder abgeben. Als besonders vorteilhaft haben sich dabei separat oder in Kombination mit weiteren Drehschwingungsdämpfern eingesetzte drehzahladaptive Drehschwingungstilger in Form von Fliehkraftpendeln erwiesen. Hierbei werden auf einem um eine Drehachse rotierenden Teil des Torsionsschwingungssystems entlang eines Schwingwinkels gegenüber dem rotierenden Teil, beispielsweise einem Pendelflansch, mehrere über den Umfang verteilte, verschwenkbare Pendelmassen angeordnet. Diese Pendelmassen führen im Feld der Zentrifugalbeschleunigung Schwingungen auf vorgegebenen Bahnen aus, wenn sie durch Drehzahlungleichförmigkeiten wie Torsionsschwingungen angeregt werden. Durch diese Schwingungen wird der Erregerschwingung zu passenden Zeiten Energie entzogen und wieder zugeführt, so dass es zu einer Beruhigung der Erregerschwingung kommt. Da sowohl die Eigenfrequenz der Fliehkraftpendelschwingung als auch die Erregerfrequenz proportional zur Drehzahl sind, kann die Tilgerwirkung eines Fliehkraftpendels über den ganzen Frequenzbereich, also drehzahladaptiv erzielt werden.

Derartige Fliehkraftpendel können, wie beispielsweise aus der DE 10 2010 034 812 A1 bekannt, in Verbindung mit einem Drehschwingungsdämpfer eingesetzt werden. Beispielsweise kann ein Fliehkraftpendel in einer Kupplungsscheibe mit oder ohne Drehschwingungsdämpfer untergebracht sein, wobei der Pendelflansch des Fliehkraftpendels drehfest auf der Nabe der Kupplungsscheibe befestigt ist. Die Kupplungsscheibe mit Drehschwingungsdämpfer kann dabei im Wesentlichen eine oder mehrere in Reihe geschaltete Dämpferstufen aufweisen. Eine erste Dämpferstufe eines mehrstufigen Drehschwingungsdämpfers zeigt eine niedrige Steifigkeit und eine geringe Reibung, die bei niedrigen Drehmomenten eines Antriebsstrangs, beispielsweise in den Fahrzuständen Kriechen, Leerlauf und dergleichen wirksam ist. Eine zweite Dämpferstufe kann bei Überschreiten eines maximalen Verdrehwinkels der ersten Dämpferstufe aktiviert werden und dient der Dämpfung von höheren Drehmomenten, beispielsweise während einer Beschleunigung des Kraftfahrzeugs mit einem entsprechenden Antriebsstrang. Hierzu weist diese Dämpferstufe eine steilere Kennlinie und eine höhere Reibung auf.

DE 10 2006 028 552 A1 offenbart eine Kupplungseinrichtung mit einer Kupplungsscheibe, die eine eine Fliehkraftpendeleinrichtung aufweisende Kupplungsnabe umfasst.

Das auf einer derartigen Kupplungsscheibe eingesetzte Fliehkraftpendel erhöht das Massenträgheitsmoment der Getriebeeingangswelle, wodurch bei hohen Momentschwankungen und kleiner Drehzahl die Dämpfungskapazität der ersten Dämpferstufe, beispielsweise beim Stilllegen der Brennkraftmaschine ohne eingelegten Gang und bei geschlossener Reibungskupplung auftreten kann. Hierdurch kann die Getriebeeingangswelle hohen Beschleunigungen mit entsprechender Geräuschbildung ausgesetzt sein.

Aufgabe der Erfindung ist daher, ein Fliehkraftpendel insbesondere in einer Kupplungsscheibe und eine Kupplungsscheibe mit einem Fliehkraftpendel vorzuschlagen, welches bei Momentenwechseln zumindest eine Minderung von Geräuschen ermöglicht.

Die Aufgabe wird durch ein Fliehkraftpendel mit einem um eine Drehachse verdrehbaren Pendelflansch mit mehreren über den Umfang verteilten, an dem Pendelflansch verschwenkbar aufgenommenen Pendelmassen gelöst, wobei der Pendelflansch auf einem um die Drehachse drehenden Bauteil verdrehbar aufgenommen ist und zwischen Pendelflansch und Bauteil eine Rutschkupplung wirksam angeordnet ist. Durch die Einstellung des Rutschmoments der Rutschkupplung kann das Massenträgheitsmoment des Fliehkraftpendels gezielt abgeschaltet werden, so dass beispielsweise bei Lastwechseln und dergleichen sich ein durch das Fliehkraftpendel erhöhtes Massenträgheitsmoment mit gegebenenfalls dadurch auftretenden Geräuschen wie Anschlaggeräuschen und dergleichen nicht negativ bemerkbar macht. Im Weiteren kann das Fliehkraftpendel selbst vor Beschädigung und Geräuschbildung geschützt werden, wenn dieses mittels des voreingestellten Rutschmoments der Reibungskupplung von der drehenden Welle abgekoppelt wird.

Als besonders vorteilhaft hat sich erwiesen, wenn ein auf einer Nabe einer Kupplungsscheibe angeordnetes Fliehkraftpendel mit einer Rutschkupplung gegenüber der Nabe versehen wird. Bei geöffneter Reibungskupplung ist die Masse der Kupplungsscheibe und damit des Fliehkraftpendels ausschließlich der über die Nabe verzahnten Getriebeeingangswelle zugeordnet, so dass schnelle Momentenänderungen sich beispielsweise auf Verzahnungen im Getriebe auswirken können und Geräusche im Getriebe entstehen können. Insbesondere bei einer Ausbildung der Kupplungsscheibe mit einer als Leerlaufdämpfer eingesetzten Dämpferstufe kann diese durch das mittels der Rutschkupplung abschaltbare Fliehkraftpendel auch bei kleinen Momenten vor einem Anschlag geschützt und funktionsfähig erhalten werden.

Die Rutschkupplung wird durch eine mittels eines Energiespeichers, beispielsweise eine oder mehrere Federn wie Tellerfeder, vorgespannte Reibeinrichtung gebildet, wobei axial oder konisch ausgebildete Reibflächen an dem Pendelflansch und dem Bauteil vorgesehen sind, die unter axialer Vorspannung des Energiespeichers ein vorgegebenes Rutschmoment der Rutschkupplung ausbilden.

Die Aufgabe wird weiterhin durch eine Kupplungsscheibe mit einem Reibbeläge tragenden Eingangsteil und einem als Nabe ausgebildeten Ausgangsteil sowie zumindest einer zwischen Eingangsteil und Ausgangsteil angeordneten Dämpferstufe und einem axial beabstandet zur zumindest einen Dämpferstufe angeordneten Fliehkraftpendel mit einem auf der Nabe zentrierten Pendelflansch und mehreren, an dem Pendelflansch über den Umfang verteilt und verschwenkbar aufgenommenen Pendelmassen gelöst, wobei zwischen Pendelflansch und Nabe eine Rutschkupplung angeordnet ist. Bevorzugt ist die Kupplungsscheibe mit zwei Dämpferstufen - einem Leerlaufdämpfer mit geringem Dämpfungsmoment und einem Hauptdämpfer mit dem über die Kupplungsscheibe unter Last zu übertragenden Moment - ausgebildet. Das Fliehkraftpendel ist dabei bezüglich seiner Wirkung dem aus Leerlauf- und Hauptdämpfer gebildeten Drehschwingungsdämpfer parallel geschaltet und wird bei auftretenden, das Rutschmoment der Rutschkupplung übersteigenden Momentenänderungen, beispielsweise während Beschleunigungen abgeschaltet. Die Rutschkupplung kann mit einem Freilauf ausgestattet wie überlagert sein, so dass die Abkopplung des Fliehkraftpendels nur in eine Drehmomentrichtung erfolgt.

In einer bevorzugten Ausführungsform einer Kupplungsscheibe mit abkoppelbarem Fliehkraftpendel sind an der Nabe und an dem Pendelflansch einen Reibeingriff bildende Reibflächen angeordnet. Im Sinne einer kostengünstigen Ausbildung der Nabe ist hierbei an der beispielsweise gesinterten, warm umgeformten, spanend oder in ähnlicher Weise hergestellten Nabe ein die Reibfläche enthaltender Ringbund mit einer Reibfläche einteilig angearbeitet.

Die Vorspannung der Reibflächen zwischen Nabe und Pendelflansch erfolgt mittels eines Energiespeichers der axial zwischen der Nabe und dem Pendelflansch verzahnt ist. Zur axialen Abstützung des Energiespeichers ist bevorzugt ein Stützbund vorgesehen, der einteilig an der Nabe angearbeitet ist, wobei in bevorzugter Weise der Pendelflansch zuerst auf der Nabe gegen einen die Reibfläche enthaltenden Anschlag wie Ringbund und anschließend der Energiespeicher, beispielsweise eine Tellerfeder, aufgebracht und zentriert werden und anschließend beispielsweise durch Verstemmen, Rollieren oder dergleichen der Stützbund, der ringförmig oder aus über den Umfang verteilt angeordneten Stützsegmenten gebildet sein kann, unter Einstellung der Vorspannung des Pendelflanschs zur Nabe hergestellt wird.

In vorteilhafter Weise kann der bevorzugt aus einer Tellerfeder gebildete Energiespeicher an dem Pendelflansch drehfest eingehängt sein und gegenüber dem dann in bevorzugter Weise ringförmig ausgebildeten Stützbund eine weitere Reibstelle bei aktivierter Rutschkupplung bilden.

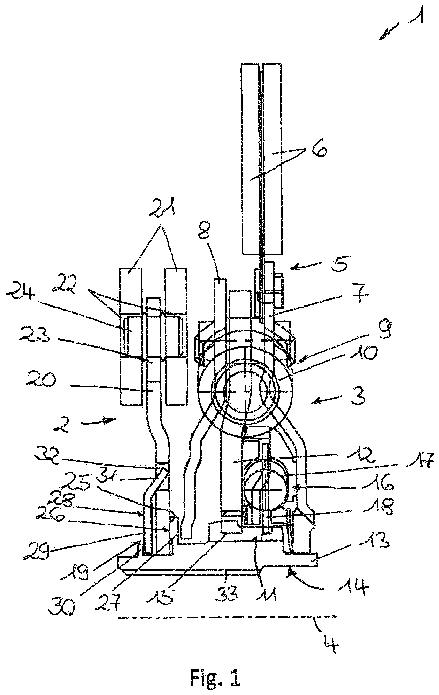

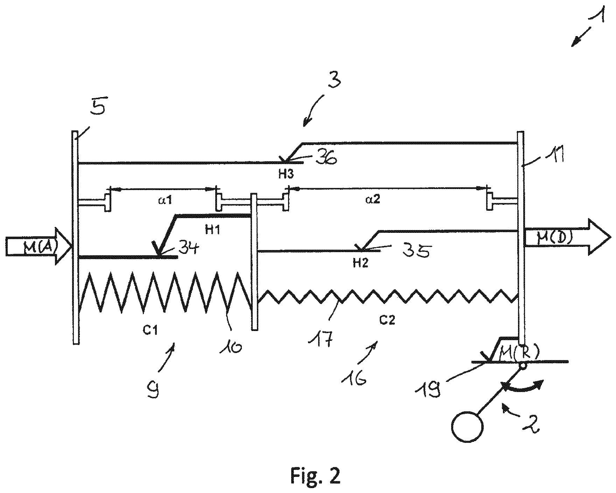

Die Erfindung wird anhand des in den Figuren 1 und 2 dargestellten Ausführungsbeispiels näher erläutert. Dabei zeigen:
- Figur 1: einen Teilschnitt durch eine Kupplungsscheibe mit einem mittels Rutschkupplung abkoppelbaren Fliehkraftpendel und
- Figur 2: ein Prinzipschaltbild der Kupplungsscheibe der Figur 1 mit zweistufigem Drehschwingungsdämpfer und parallel geschaltetem Fliehkraftpendel.

Die Figur 1 zeigt den oberen Teil der um die Drehachse 4 angeordneten Kupplungsscheibe 1 mit dem Fliehkraftpendel 2 und dem Drehschwingungsdämpfer 3. Das Eingangsteil 5 der Kupplungsscheibe 1 ist aus dem die Reibbeläge 6 tragenden, mit dem Scheibenteil 8 die Energiespeicher 10 der Dämpferstufe 9 des Hauptdämpfers beaufschlagenden Scheibenteil 7, das Ausgangsteil 11 durch die Nabe 13 gebildet. Der Flansch 12 ist an der Verzahnung 15 mit Verdrehspiel mit dem als Nabe 13 ausgebildeten Bauteil 14 verzahnt, über dessen Verdrehwinkel die zweite Dämpferstufe 16 des Leerlaufdämpfers, deren Energiespeicher 17 zwischen dem Flansch 12 und dem direkt mit der Nabe 13 verzahnten Mitnehmer 18 verspannt sind. Die Energiespeicher 10 werden zwischen dem Eingangsteil 5 und dem Mitnehmer 18 verspannt.

Das Fliehkraftpendel 2 ist auf dem Bauteil 14 wie Nabe 13 mittels der Rutschkupplung 19 nach Überwindung eines durch die Rutschkupplung 19 bereitgestellten Rutschmoments verdrehbar aufgenommen. Hierzu ist der Pendelflansch 20, an dem beidseitig über den Umfang verteilt die Pendelmassen 21 mittels der in den Ausschnitten 22, 23 des Pendelflanschs 20 und der Pendelmassen 21 abwälzende Rollen 24 verschwenkbar aufgenommen sind, unter Bildung eines Reibeingriffs mittels der Reibfläche 25 gegen die Reibfläche 26 des an der Nabe 13 einteilig ausgebildeten Ringbunds 27 axial vorgespannt. Die Vorspannung übernimmt der als Tellerfeder 29 ausgebildete Energiespeicher 28, der sich an dem an der Nabe 13 angearbeiteten Lagerbund 30 abstützt und mittels der Finger 31 in die Ausschnitte 32 eingreift und damit drehfest mit dem Pendelflansch 20 verbunden ist und entlang des Lagerbunds 30 bei überwundenem Rutschmoment der Rutschkupplung 19 gleitet.

Das Fliehkraftpendel 2 ist dem Drehschwingungsdämpfer 3 parallel geschaltet und tilgt bei nicht aktiver Rutschkupplung 19 drehzahladaptiv Schwingungen. Bei geöffneter Reibungskupplung ist das Massenträgheitsmoment des Fliehkraftpendels 2 an die mittels der Innenverzahnung 33 drehschlüssig mit der Nabe 13 verbundene Getriebeeingangswelle gekoppelt. Um einerseits die Wirksamkeit der zweiten Dämpferstufe 16 des Drehschwingungsdämpfers 3 zu erhalten und andererseits durch das Massenträgheitsmoment des Fliehkraftpendels 2 in dem Getriebe induzierte Geräusche zu unterbinden, wird das Fliehkraftpendel 2 bei die Momentenkapazität der Dämpfungsstufe 16 überschreitenden Massenträgheitsmomenten mittels der Rutschkupplung 19 angekoppelt.

Figur 2 zeigt in schematischer Darstellung die Beschaltung der Kupplungsscheibe 1 mit dem von der Antriebsseite, beispielsweise von einer Brennkraftmaschine drehschwingungsbehaftet auf das Eingangsteil 5 eingebrachten Zugmoment M(A) und dem die Kupplungsscheibe 1 bedämpft an dem Ausgangsteil 11 ausgeleiteten Moment M(D). Zwischen Eingangsteil 5 und Ausgangsteil 11 sind der Drehschwingungsdämpfer 3 und parallel hierzu über die Nabe 13 (Figur 1) das mittels der Rutschkupplung 19 abkoppelbare Fliehkraftpendel 2 wirksam. Der Drehschwingungsdämpfer 3 enthält die Dämpferstufen 9, 16 mit den Energiespeichern 10, 17 mit den Federkapazitäten C1, C2 und Kompressionswinkeln α1, α2 sowie die Reibeinrichtungen 34, 35 mit den Reibhysteresen H1, H2. Über den gesamten Verdrehwinkel zwischen Eingangsteil 5 und Nabe 13 ist die Reibeinrichtung 36 mit der Reibhysterese H3 geschaltet. Aufgrund der höheren Steifigkeit der Energiespeicher 10 sind bei geringen Momenten zuerst die Energiespeicher 17 der Dämpferstufe 16 aktiv. Bei akuten Momentenänderungen wird das Rutschmoment M(R) der Rutschkupplung 19 überschritten und das Fliehkraftpendel 2 abgekoppelt.

### Bezugszeichenliste

- 1: Kupplungsscheibe
- 2: Fliehkraftpendel
- 3: Drehschwingungsdämpfer
- 4: Drehachse
- 5: Eingangsteil
- 6: Reibbelag
- 7: Scheibenteil
- 8: Scheibenteil
- 9: Dämpferstufe
- 10: Energiespeicher
- 11: Ausgangsteil
- 12: Flansch
- 13: Nabe
- 14: Bauteil
- 15: Verzahnung
- 16: Dämpferstufe
- 17: Energiespeicher
- 18: Mitnehmer
- 19: Rutschkupplung
- 20: Pendelflansch
- 21: Pendelmasse
- 22: Ausschnitt
- 23: Ausschnitt
- 24: Rolle
- 25: Reibfläche
- 26: Reibfläche
- 27: Ringbund
- 28: Energiespeicher
- 29: Tellerfeder
- 30: Lagerbund
- 31: Finger
- 32: Ausschnitt
- 33: Innenverzahnung
- 34: Reibeinrichtung
- 35: Reibeinrichtung
- 36: Reibeinrichtung
- C1: Federkapazität
- C2: Federkapazität
- H1: Reibhysterese
- H2: Reibhysterese
- H3: Reibhysterese
- M(A): Zugmoment
- M(D): Moment
- M(R): Rutschmoment
- α1: Kompressionswinkel
- α2: Kompressionswinkel

## Patentansprüche

1. Fliehkraftpendel (2) mit einem um eine Drehachse (4) verdrehbaren Pendelflansch (20) mit mehreren über den Umfang verteilten, an dem Pendelflansch (20) verschwenkbar aufgenommenen Pendelmassen (21), **dadurch gekennzeichnet, dass** der Pendelflansch (20) auf einem um die Drehachse (4) drehenden Bauteil (14) verdrehbar aufgenommen ist und zwischen Pendelflansch (20) und Bauteil (14) eine Rutschkupplung (19) wirksam angeordnet ist, wobei die Rutschkupplung (19) durch eine mittels eines Energiespeichers vorgespannte Reibeinrichtung gebildet ist, wobei axial oder konisch ausgebildete Reibflächen (25, 26) an dem Pendelflansch (20) und dem Bauteil (14) vorgesehen sind, die unter axialer Vorspannung des Energiespeichers ein vorgegebenes Rutschmoment der Rutschkupplung (19) ausbilden.

2. Fliehkraftpendel (2) nach Anspruch 1, **dadurch gekennzeichnet, dass** das Bauteil (14) aus einer Nabe (13) einer Kupplungsscheibe (1) gebildet ist.

3. Kupplungsscheibe (1) mit einem Reibbeläge (6) tragenden Eingangsteil (5) und einem als Nabe (13) ausgebildeten Ausgangsteil (11) sowie zumindest einer zwischen Eingangsteil (5) und Ausgangsteil (11) angeordneten Dämpferstufe (9, 16) und einem axial beabstandet zur zumindest einen Dämpferstufe (9, 16) angeordneten Fliehkraftpendel (2) mit einem auf der Nabe (13) zentrierten und verdrehbar aufgenommenen Pendelflansch (20) und mehreren, an dem Pendelflansch (20) über den Umfang verteilt und verschwenkbar aufgenommenen Pendelmassen (21), **dadurch gekennzeichnet, dass** zwischen Pendelflansch (20) und Nabe (13) eine Rutschkupplung (19) angeordnet ist.

4. Kupplungsscheibe (1) nach Anspruch 3, **dadurch gekennzeichnet, dass** an der Nabe (13) und an dem Pendelflansch (20) die Rutschkupplung bildende, einen Reibeingriff bildende Reibflächen (25, 26) angeordnet sind.

5. Kupplungsscheibe (1) nach Anspruch 4, **dadurch gekennzeichnet, dass** an der Nabe (13) ein Ringbund (27) mit einer der Reibflächen (26) einteilig angearbeitet ist.

6. Kupplungsscheibe (1) nach Anspruch 4 oder 5, **dadurch gekennzeichnet, dass** der Pendelflansch (20) entgegen der Wirkung eines Energiespeichers (28) gegen die Nabe (13) vorgespannt ist.

7. Kupplungsscheibe (1) nach Anspruch 6, **dadurch gekennzeichnet, dass** sich der Energiespeicher (28) an einem an der Nabe (13) einteilig angearbeiteten Lagerbund (30) abstützt.

8. Kupplungsscheibe (1) nach Anspruch 6 oder 7, **dadurch gekennzeichnet, dass** der Energiespeicher (28) drehfest in den Pendelflansch (20) eingehängt ist.

9. Kupplungsscheibe (1) nach einem der Ansprüche 6 bis 8, **dadurch gekennzeichnet, dass** der Energiespeicher (28) eine Tellerfeder (29) ist.

## Claims

1. A centrifugal pendulum (2) having a pendulum flange (20) rotatable about an axis of rotation (4) with several pendulum masses (21) distributed over the circumference and held pivotably on the pendulum flange (20), **characterised in that** the pendulum flange (20) is held twistably on a component (14) rotating about the axis of rotation (4) and a slip clutch (19) is arranged effectively between the pendulum flange (20) and the component (14), wherein the slip clutch (19) is formed by a friction device biased by means of an energy accumulator, wherein axially or conically formed friction surfaces (25, 26) are provided on the pendulum flange (20) and the component (14), which form a predetermined slip torque of the slip clutch (19) under axial biasing of the energy accumulator.

2. The centrifugal pendulum (2) according to claim 1, **characterised in that** the component (14) is formed from a hub (13) of a clutch disk (1).

3. A clutch disk (1) having an input part (5) carrying friction linings (6) and an output part (11) designed as a hub (13) and at least one damper stage (9, 16) arranged between the input part (5) and the output part (11) and a centrifugal pendulum (2) arranged to be axially spaced from the at least one damper stage (9, 16) with a pendulum flange (20) centred and held twistably on the hub (13) and a plurality of pendulum masses (21) distributed over the circumference and held pivotably on the pendulum flange (20), **characterised in that** a slip clutch (19) is arranged between the pendulum flange (20) and the hub (13).

4. The clutch disk (1) according to claim 3, **characterised in that** friction surfaces (25, 26) forming the slip clutch and forming a frictional engagement are arranged on the hub (13) and on the pendulum flange (20).

5. The clutch disk (1) according to claim 4, **characterised in that** a ring collar (27) is machined in one piece with one of the friction surfaces (26) on the hub (13).

6. The clutch disk (1) according to claim 4 or 5, **characterised in that** the pendulum flange (20) is biased against the hub (13) against the action of an energy accumulator (28).

7. The clutch disk (1) according to claim 6, **characterised in that** the energy storage device (28) is supported on a bearing collar (30) which is machined integrally onto the hub (13).

8. The clutch disk (1) according to claim 6 or 7, **characterised in that** the energy storage device (28) is suspended rotation testingly in the pendulum flange (20).

9. The clutch disk (1) according to one of claims 6 through 8, **characterised in that** the energy store (28) is a cup spring (29).

## Revendications

1. Pendule centrifuge (2) comportant un flasque de pendule (20) pouvant tourner autour d'un axe de rotation (4) et comportant plusieurs masses pendulaires (21) réparties sur la périphérie et reçues de manière pivotante sur le flasque de pendule (20), **caractérisé en ce que** le flasque de pendule (20) est reçu de manière rotative sur un élément (14) tournant autour de l'axe de rotation (4) et un embrayage à friction (19) est agencé de manière active entre le flasque de pendule (20) et l'élément (14), l'embrayage à friction (19) étant formé par un dispositif de friction précontraint au moyen d'un accumulateur d'énergie, des surfaces de friction (25, 26) conçues de manière axiale ou conique étant prévues sur le flasque de pendule (20) et l'élément (14), qui forment un couple de friction prédéfini de l'embrayage à friction (19) sous précontrainte axiale de l'accumulateur d'énergie.

2. Pendule centrifuge (2) selon la revendication 1, **caractérisé en ce que** l'élément (14) est formé à partir d'un moyeu (13) d'un disque d'embrayage (1).

3. Disque d'embrayage (1) comportant une partie d'entrée (5) supportant des garnitures de friction (6) et une partie de sortie (11) réalisée sous forme de moyeu (13), ainsi qu'au moins un étage d'amortissement (9, 16) agencé entre la partie d'entrée (5) et la partie de sortie (11) et un pendule centrifuge (2) agencé de manière espacée axialement par rapport à l'au moins un étage d'amortissement (9, 16) et comportant un flasque de pendule (20) reçu de manière rotative et centré sur le moyeu (13) et plusieurs masses pendulaires (21) reçues de manière pivotante et réparties sur la périphérie sur le flasque de pendule (20), **caractérisé en ce qu'**un embrayage à friction (19) est agencé entre le flasque de pendule (20) et le moyeu (13).

4. Disque d'embrayage (1) selon la revendication 3, **caractérisé en ce que** des surfaces de friction (25, 26) formant l'embrayage à friction et formant un engagement par friction sont agencées sur le moyeu (13) et sur le flasque de pendule (20).

5. Disque d'embrayage (1) selon la revendication 4, **caractérisé en ce qu'**un collet annulaire (27) comportant l'une des surfaces de friction (26) est ménagé d'un seul tenant sur le moyeu (13).

6. Disque d'embrayage (1) selon la revendication 4 ou 5, **caractérisé en ce que** le flasque de pendule (20) est précontraint contre le moyeu (13) à l'encontre de l'action d'un accumulateur d'énergie (28).

7. Disque d'embrayage (1) selon la revendication 6, **caractérisé en ce que** l'accumulateur d'énergie (28) s'appuie sur un collet de palier (30) ménagé d'un seul tenant sur le moyeu (13).

8. Disque d'embrayage (1) selon la revendication 6 ou 7, **caractérisé en ce que** l'accumulateur d'énergie (28) est suspendu de manière bloquée en rotation dans le flasque de pendule (20).

9. Disque d'embrayage (1) selon l'une quelconque des revendications 6 à 8, **caractérisé en ce que** l'accumulateur d'énergie (28) est un ressort Belleville (29).
